(19)

Europäisches
Patentamt
European
Patent Office
Office européen
des brevets

(11)     **EP 4 636 000 A1**

(12)     **EUROPEAN PATENT APPLICATION**

(43) Date of publication:
**22.10.2025  Bulletin 2025/43**

(21) Application number: **24170621.7**

(22) Date of filing: **16.04.2024**

(51) International Patent Classification (IPC):
**C08G 18/28** *(2006.01)*       **C08G 18/48** *(2006.01)*
**C08G 18/66** *(2006.01)*       **C08G 18/76** *(2006.01)*
**C08G 18/79** *(2006.01)*

(52) Cooperative Patent Classification (CPC):
**C08G 18/283; C08G 18/4816; C08G 18/4841;**
**C08G 18/6674; C08G 18/7664; C08G 18/797;**
C08G 2110/0033; C08G 2110/0066;
C08G 2110/0083

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **Covestro Deutschland AG**
  **51373 Leverkusen (DE)**

• **Covestro LLC**
  **Pittsburgh, PA 15205 (US)**

(72) Inventor: **The designation of the inventor has not yet been filed**

(74) Representative: **Levpat**
  **c/o Covestro AG**
  **Gebäude K12**
  **51365 Leverkusen (DE)**

(54)     **ENCAPSULATION MATERIAL MADE FROM A POLYURETHANE FOAM COMPOSITION**

(57)     An isocyanate - reactive formulation particular suitable for the production of polyurethane foams which may be used as encapsulation material for battery module, a reactive polyurethane foam composition made therefrom with polyisocyanates and a process to make polyurethane foams by conversion of such reactive foam composition are disclosed.

**EP 4 636 000 A1**

**Description**

The present disclosure relates to an isocyanate reactive component for polyurethane foams comprising a specific mixture of polyols, a chain terminator component and a chain extender component, as well as to a reactive polyurethane foam composition made therefrom with polyisocyanates and a process to make polyurethane foams by conversion of such reactive composition. The polyurethane foam composition may be used as encapsulation material for battery modules.

The polyurethane foam composition exhibits a balanced reactivity profile during application, and provides the formed foam with improved physical properties, specifically with regard to tensile, elastic and insulating properties.

Currently, polyurethane foam compositions for the encapsulation of multi-layer cylinder batteries (also called "encapsulation materials") are of high interest. Encapsulation materials need to fulfill various requirements with regard to physical properties, e.g. elastic modulus, elongation, thermal and electrical stability to ensure long term stability of the battery under various use conditions such as vibration, high temperature and high humidity.

At the same time, smooth filling of the often complex cavity structures of the batteries is crucial. It is therefore required that the viscosity of the polyurethane foam composition remains low until injection is completed and the mixture is equally distributed in the cavity. However, for short molding cycle time, subsequent curing shall be fast to enable quick demolding.

WO 2022/188050 A discloses encapsulation foam compositions with polyols having OH numbers > 200 mg KOH / g and claims that when polyether polyols are used, an average functionality of > 3 and < 4 and an OH number in the range from 300 to 1000 is needed to , mixed with an isocyanate component, to produce a polyurethane foam which fulfills the tensile strength requirement of > 3.5 MPa at 25°C. The formulation comprises an FR additive, but the use of chain extenders or crosslinkers is not disclosed.

US 2019/0259982 A1 also discloses polyurethane foam compositions for the use in batteries. In the isocyanate reactive formulations of the examples, tri- and four-functional polyether polyols are used, partly together with glycerin and triethanolamine as crosslinkers. The use of mixtures of chain extenders and crosslinkers, much less molar ratios, is not disclosed.

CN 117096413 A claims foam compositions comprising at least one polyether polyol having molecular weights of 500 to 7000 g/mol, preferably of 2000-6000 g/mol with functionalities of 2 - 3, at least one chain extender having a molecular weight of less than 500 g/mol; an FR additive and optionally a crosslinking agent. In the inventive examples of the isocyanate reactive formulations, a trifunctional polyether polyol with an OH number of 28 together with a SAN-grafted polyether polyol (OH number 20) is used as well as monoethyleneglycol (MEG) and glycerin (GLY). In one non-inventive example, no chain extender and crosslinker is used while the formulation is said to be too viscous, in the other one 35 weight-% MEG and 5 weight-% GLY are used (wt.%-ratio 7:1) while it is said that the formulation is too liquid.

WO 2024/052451 A1 discloses a potting material for batteries comprising O-H- chain extenders (c1) and aromatic diamine curing agents (c2) as well as flame retardants.

However, the foams made from reaction of such isocyanate reactive components with isocyanates are still not satisfactory with regard to all industry's requirements to physical properties for battery encapsulation material. Specifically, there is still the need for isocyanate reactive components which give, when reacted with the isocyanate, polyurethane foam compositions with good flow and curing characteristics, and, after curing, result in polyurethanes with good elastic modulus, elongation at break, tensile strength and adhesion properties to metal (e.g. steal, Hilumin®) and/or organic surfaces (e.g. thermoplastics).

It was found that the deficiencies of the of the prior art may be overcome by an isocyanate reactive component comprising

A1) 50 - 80 wt.-%, preferably 60 - 70 wt.-%, based on the total weight of A, polyols selected from the group consisting of polyether polyols with an isocyanate reactive functionality of 2,5 - 3,5 and an OH number of > 20 mg KOH / g and < 280 mg KOH/g,

A2) 0 - 20 wt.%, preferably 0,1 - 10 wt.%, based on the total weight of A, polyols selected from the group consisting of polyether polyols with an isocyanate reactive functionality of 2,5 - 4,5 and an OH number of ≥ 280 mg KOH / g and < 700 mg KOH/g,

A3) > 0,0 - < 15,0 wt.%, preferably 1 - 12 wt.%, more preferably 3-10 wt.% based on the total weight of A, chain terminators selected from the group consisting of compounds with an isocyanate reactive functionality f of 0,8 - 1,2,

A4) > 10 - < 35 wt.-%, preferably 12 - 25 wt.-%, based on the total weight of A, chain extenders selected from the group consisting of compounds with an isocyanate reactive functionality of 1,8 - 2,2 and a molecular weight of < 500 g/mol, preferably < 300 g/mol, more preferably < 200 g/mol,

A5) 0 - < 12 wt.-%, preferably 1 - 10 wt.-%, based on the total weight of A, crosslinkers selected from the group consisting of compounds comprising compounds with an isocyanate reactive functionality > 2,2 and a molecular weight of < 500 g/mol, preferably < 400 g/mol, most preferably < 300 g/mol

A6) 0,2 - 2 wt.% water,

A7) optionally a catalyst, and

A8) optionally adjuvants and additives.

Representatives of the herein described components A1) - A8) are commercially available and known to the persons skilled in the art.

The encapsulation material is produced by reacting a reaction mixture comprising the herein described isocyanate reactive component A with herein described isocyanate component B.

Unless defined otherwise, all technical and scientific terms used herein have the same meaning as commonly understood by those skilled in the art. In case of conflict, the definition provided herein shall prevail.

Unless stated otherwise, all percentages, parts, proportions, etc. are by weight. Those skilled in the art should understand that the sum of all components in the composition may be appropriately 100%. When quantity, concentration or other values or parameters are given as ranges, preferred ranges or preferred upper and lower limit values or specific values, it should be understood that all ranges formed by the paired values of any upper limit range or preferred value and any lower limit range or preferred value are specifically disclosed, regardless of whether the ranges are separately disclosed. Unless stated otherwise, when a numerical range is referenced herein, the range includes its endpoints, and all integers and fractions within the range.

The term "optional" or "optionally" as used herein refers to the event or situation described later that may or may not occur, as well as the optional situation of the content described later. For example, when the content of a component herein is of 0% to 5%, it means that the component may be optionally present, that is, both the case of absence (0%) and presence (>0-5%) are covered.

The term "one or more" or "at least one" as used herein refers to one, two, three, four, five, six, seven, eight, nine or more.

The terms "and/or" used herein include "and" and "or". A plurality of elements, parts or steps defined by "and/or" represent any one of the elements, parts or steps and any combination thereof. For example, "A and/or B" covers A, B and A+B; "A, B and/or C" covers A, B, C, A+B, A+C, B+C and A+B+C.

Unless stated otherwise, the terms "combination thereof", "any combination thereof" and "mixture thereof" refer to multi-component mixtures of said elements, such as mixtures of two, three, four and up to the maximum possible number of components.

In addition, if no number is indicated in front of the parts or components of the present invention, it means that there is no limit on the number of the occurring (or existing) parts or components. Therefore, it should be interpreted as including one or at least one, and the singular form of the part or component also includes the plural, unless the number clearly indicates the singular.

Herein, "more" or "several" means two or more than two. There is no specific requirements for which of them, unless specified otherwise. Unless explicitly stated in the context, "a" may cover the singular and plural forms.

In the context of the present invention, the numerical average molar mass Mn (also: molecular weight) is determined by gel permeation chromatography according to DIN 55672-1 (August 2007).

In the case of a single added polyol, the OH number (also known as the hydroxyl number) indicates its OH number. The OH number for mixtures refers to the average OH number of the mixture, calculated from the OH numbers of the individual components in their respective molar proportions. The OH number indicates the amount of potassium hydroxide in milligrams, which is equivalent to the amount of acetic acid bound during an acetylation of one gram of substance. In the context of the present invention, the OH number is determined according to the standard DIN 53240-1 (June 2013).

Herein, if not indicated otherwise, the term "functionality" refers to the theoretical mean functionality (number of functions in the molecule that are reactive to isocyanates or to polyols) calculated from the known feedstocks and their proportions. According to the present disclosure, the "isocyanate reactive functionality of a polyether polyol" as well as the "functionality of a polyether polyol" refer to the isocyanate reactive functionality of the subsequent starter(s) used to produce such a polyether polyol.

Herein, a "cell" refers to a single electrochemical cell containing both positive and negative electrodes. A "battery module" comprises a number of cells that are encapsulated together in the same housing. The battery cell and the battery module in the present invention are mainly used in devices for electric vehicles. The number of the battery cells in the battery module is not restricted and e.g. may be 10-5000, preferably 100-2000.

The preparation of the reactive foam composition made from the isocyanate reactive component A and the isocyanate component B is generally carried out by mixing the components in a mixing chamber (mixing head). The liquid reaction mixture is then immediately introduced into the open or closed cavity of the device to be foamed (e.g. by using a high- or low-pressure system). Machines suitable for this purpose are known to the person skilled in the art.

To ensure optimal filling of the cavity, the reaction mixture preferentially has an initial viscosity (i.e. a viscosity at the time immediately after mixing) of < 2500 mPas*s.

In the context of the present invention, the "viscosity" refers to the dynamic viscosity, which can be determined according to DIN 53019-1 (September 2008).

The isocyanate reactive component A comprises 50 - 80 wt.-%, based on the total weight of A, polyol components A1 and 0 - 20 wt.-% polyol components A2).

A1 and A2 are polyhydroxypolyethers which can be prepared in a manner known per se by the polyaddition of alkylene oxides onto polyfunctional starter compounds in the presence of catalysts. The polyhydroxypolyethers are preferably prepared from a starter compound or a mixture of starter compounds having an average of 2 to 8 active hydrogen atoms, and one or more alkylene oxides. Preferred starter compounds are molecules with two to eight hydroxyl groups per molecule, such as water, ethylene glycol, propylene glycol, diethylene glycol, dipropylene glycol, triethylene glycol, tripropylene glycol, 1,4-butanediol, 1,6-hexanediol, triethanolamine, glycerin, trimethylolpropane, pentaerythritol, sorbitol, ethylenediamine, o-TDA and sucrose.

The average hydroxy functionality the starter compounds of A1 is 2,5 to 3,5, more preferably from 2,8 to 3,2 i.e. if starter compounds with an isocyanate reactive functionality of < 2,5 or > 3,5 are used, they are used in a mixture of starter compounds with an average hydroxy functionality of 2,5 to 3,5, more preferably from 2,8 to 3,2.

The polyols are prepared from one or more alkylene oxides, the alkylene oxides used preferably being oxirane (ethylenoxide), methyloxirane (propylenoxide) and ethyloxirane (butyleneoxide). These can be used on their own or in a mixture. When used in a mixture, the alkylene oxides can be reacted randomly and/or in blocks. Higher-molecular polyhydroxypolyethers in which high-molecular polyadducts/polycondensation products or polymers are in finely disperse, dissolved or grafted form are also suitable (called polymer polyols). Polyhydroxyl compounds modified by vinyl polymers, such as those obtained e.g. by the polymerization of styrene and acrylonitrile in the presence of polyethers are also suitable as polyol components for the process according to the invention, however preferably used in lower percentages, e.g up to 30 wt.-%.

The polyol component A1 used is selected from one or more of the group consisting of polyhydroxypolyethers having a hydroxyl number of 6 to 280, preferably of 21 to 112, more preferably from > 30 to < 56 mg KOH/g and an average hydroxy functionality of 2,5 to 3,5, more preferably from 2,8 to 3,2. The polyhydroxypolyethers are preferably started with glycerin and/or trimethylolpropane.

In a preferred embodiment, the polyol component A1 is a polyalkyleneoxide, wherein the alkylenoxide is a mixture of ethylenoxide (EO) and propylenoxide (PO) with an EO/PO molar ratio of 10:90 - 15:85. Preferably the EO/PO-polyetherpolyol is started with glycerin and/or trimethylolpropane.

The isocyanate reactive component A may further comprise up to 20 wt.-%, polyol, preferably 0,5 - 10 wt.% and most preferably 1 - 5 wt.% of polyol component A2) selected from one or more polyhydroxypolyethers having a hydroxyl number of 280 - 700, preferably of 400 to 650 mg KOH/g and an average hydroxy functionality of 2,5 to 4,5. In one preferred embodiment, A2) is a trifunctional polypropyleneoxide, started with glycerin or trimethylolpropane. In another preferred embodiment, A2) is a tetrafunctional polypropyleneoxide, started with ethylenediamine.

In addition to A1 and A2, the isocyanate reactive component A may comprise further polyols different from A1 and A2 with an isocyanate reactive functionality > 1, e.g with functionalities 2, 3, 4, 5 or 6 selected from the group consisting of polyether polyols, polyester polyols, polyether ester polyols, polycarbonate polyols and polyether polycarbonate polyols. Polyester polyols, polyether ester polyols and/or polyether polyols are preferred. These polyol components may be selected from the range of polyols known to the person skilled in the art, preferably from those with a hydroxyl number between 25 and 1000 mg KOH/g, and in particular between 50 to 100 mg KOH/g or 100 to 300 mg KOH/g or 300 to 500 mg KOH/g or 500 to 900 mg KOH/g. Preferably, the individual polyol component has a numerical average molecular weight of 120 g/mol to 6000 g/mol, in particular from 400 g/mol to 2000 g/mol and especially preferably from 500 g/mol to 1000 g/mol.

Polyols A1 and A2 may be the sole polymeric polyol components with an isocyanate reactive functionality > 1,2 in the isocyanate reactive component A. In other embodiments, component A may comprise up to 35 wt.-%, preferably < 20 wt.-% polyols with an isocyanate reactive functionality > 1,2 different from A1 and A2.

The isocyanate reactive component further comprises > 0,0 - < 15,0 wt.%, preferably 1 - 12 wt.%, more preferably 3 - 10 wt.% of a chain terminating component A3) with an isocyanate reactive functionality of 0,8 - 1,2. The addition of chain terminators in this concentration range surprisingly has an advantageous effect on the deformation capability and tensile strength.

Component A3 may exhibit one hydroxy function (monoalcohol) or one reactive amine function. Most preferably, component A3) is a monoalcohol (monool). According to the present disclosure, monools have an isocyanate reactive functionality of 1.

Examples of monoalcohols are methanol, ethanol, *n*-propanol, isopropanol, *n*-butanol, isobutanol, *tert*-butanol, *n*-pentanol, *tert*-pentanol, neopentyl alcohol, cyclopentanol, hexanol, cyclohexanol, heptanol, octanol, 2-ethylhexanol, nonanol, decanol, undecanol, dodecanol and the higher homologues thereof, monoalkyl ether of monomeric, oligomeric or polymeric diols, for example ethylene glycol monomethyl ether, ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, polyethylene glycol monomethyl ether, polyethylene glycol monoethyl ether, polyethylene glycol monopropyl ether, polyethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, tripropylene glycol monopropyl ether, tripropylene glycol monobutyl ether, polypropylene glycol monomethyl ether, polypropylene glycol monoethyl ether, polypropylene glycol monopropyl ether, polypropylene glycol monobutyl ether, tetramethylene glycol monomethyl ether, tetramethylene glycol monoethyl ether, tetramethylene glycol monopropyl ether, tetramethylene glycol monobutyl ether, di(tetramethylene glycol) monomethyl ether, di(tetramethylene glycol) monoethyl ether, di(tetramethylene glycol) monopropyl ether, di(tetramethylene glycol) monobutyl ether, poly(tetramethylene glycol) monomethyl ether, poly(tetramethylene glycol) monoethyl ether, poly(tetramethylene glycol) monopropyl ether, poly(tetramethylene glycol) monobutyl ether.

In preferred embodiments, the monoalcohols are primary alcohols, for example methanol, ethanol, *n*-propanol, *n*-butanol, *n*-pentanol, *tert*-pentanol, neopentyl alcohol, *n*-hexanol, *n*-octanol, 2-ethylhexanol, ethylene glycol monomethyl ether, ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol monobutylether, triethylene glycol monomethyl ether, triethylene glycol monoethyl ether, triethylene glycol monopropyl ether, triethylene glycol monobutyl ether, polyethylene glycol monomethyl ether, polyethylene glycol monoethyl ether, polyethylene glycol monopropyl ether, polyethylene glycol monobutyl ether. Particularly preferred monoalcohols are monoalkyl ethers of diols, in particular ethylene glycol monomethyl ether, ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, polyethylene glycol monomethyl ether, polyethylene glycol monoethyl ether, polyethylene glycol monopropyl ether, polyethylene glycol monobutyl ether.

Further preferred are polyalkylene glycols made with a mixture of alkyleneoxides, particularly with a mixture of propylenoxide and ethylenoxide. When used in a mixture, the alkyleneoxide may be randomly distributed or in blocks, e.g. polypropylene polyethylene glycol monomethyl ether, polypropylene polyethylene glycol monoethyl ether, polypropylene polyethylene glycol monopropyl ether, polypropylene polyethylene glycol monobutyl ether, particulary preferred are copolymers with polyethyleneoxide endcaps, resulting in a primary alcohol function. The content of ethyleneoxide in the EO - endcapped polyalkylene glycol monoethers preferably is more than 20 wt.% and more preferably more than 30 wt.-%. In some embodiments, the EO - content may also be more than 55 wt.% or even more than 65 wt.-%. The OH number of these polyalkylene glycol monoethers is preferably between 10 and 200 mg KOH/g, more preferably between 10 and 112, most preferably between 12 and 30 mg KOH / g.

The isocyanate reactive compound further comprises one or more chain extenders A4). Chain extenders are small-molecule compounds with an isocyanate reactive functionality f of around 2. Suitable chain extenders A4 are those having a molecular weight of < 500 g / mol, preferably < 300 g/mol, more preferably < 200 g/mol, and an isocyanate reactive functionality of 1,8 to 2,2, preferably of 1,9 to 2,1.

Preferably, A4 comprises diols. Examples for diols comprise monoethylene glycol (MEG), diethylene glycol (DEG), 1,2-propanediol, 1,3-propanediol, dipropylene glycol, (DPG), 1,4-butanediol(BDO), 1,3-butanediol, 1,5-pentane diol, 1,6-hexane diol, neopentylglycol, short-chain alkoxylation products, e.g. tri- and tetraethylene glycol. In some preferred embodiments, the diol is selected from the group consisting of monoethylene glycol (MEG), 1,3-propanediol, diethylene glycol (DEG), dipropylene glycol (DPG) and 1,4-butanediol (BDO). It is particularly preferred that the chain extender is selected of diethylene glycol, dipropylene glycol or mixtures of these components, especially diethylene glycol.

Component A4) may also contain aliphatic or aromatic chain extenders based on aliphatic or aromatic amines. A4) may also comprise molecules with mixed hydroxy and amine - functionalities. In some embodiments, no amines with functionality f = 1,8 - 2,2 are included in the isocyanate - reactive component A. In some embodiments, neither aromatic nor aliphatic amines with functionality f = 1,8 - 2,2 are included in the isocyanate - reactive component A.

Component A4 is used in amounts of > 10 - < 35 wt.-%, preferably 12 - 25 wt.-%, based on the total weight of A.

The isocyanate reactive compound may optionally comprise a crosslinker A5.

Small-molecule compounds, which have more than two isocyanate reactive groups, are referred to as crosslinkers. The isocyanate reactive component A) preferably also contains a crosslinker selected from the group consisting of aliphatic and aromatic crosslinkers based on polyfunctional alcohols, amines or compounds with mixed functionalities. Preferably, the sole isocyanate reactive functionalities in the crosslinker molecules are OH-functionalities.

The crosslinkers used have a molecular weight of less than 500 g/mol, preferably less than 300 g/mol and especially preferably less than 200 g/mol. Examples of triols are 1,2,3-propanetriol (glycerin, GLY), trimethylolpropane (TMP) and pentaerythritol, as well as low molecular weight hydroxyl polyoxyalkylenes based on ethylene oxide and/or 1,2-propylene oxide on basis of these triols. The crosslinkers A5 in the component A most preferably comprise or consist of glycerin (GLY). The crosslinkers may also contain aliphatic or aromatic diamines such as ethylenediamine, triethylenediamine and/or diethyltoluenediamine (DETDA) or may be low molecular weight hydroxyl polyoxyalkylenes started with these amines.

If present, the preferred content of component A5 does not exceed 10 wt.% and is most preferably from 2-8 wt.-%, based on the total weight of the isocyanate reactive component A.

In a particularly preferred embodiment, the chain-extenders and crosslinkers do not contain any isocyanate reactive amine functionalities.

In a preferred embodiment, the weight-% ratio of components A4:A5 in the isocyanate reactive component is 2,5:1 to 8 :1, preferably 3,5 : 1 to 7 : 1, more preferably 4,0 : 1 - 5,5 :1 and / or the total amount of chain extenders and crosslinkers in the isocyanate reactive component is 10-30 wt.%, preferably 20 - 30 wt.% and most preferably 21 - 27 wt.%, based on component A.

If a compound falls under the definition of both component A2 and crosslinker A5, it shall be included in the weight-% of A2. The total amount of components A2 and A5 is preferably more than 1 wt.-%, more preferably more than 2 wt.% or 3 wt.% and most preferably more than 4 wt.-%. The polyether polyols A1 and/or polyethers used as monools A3 preferably comprise at least 80% of primary hydroxyl groups.

The isocyanate reactive component A comprises 0,2 - 2 wt.%., preferably 0.5 to 1 wt.%, based on the total weight of A, water.

Component A may comprise further blowing agents, including but not limited to water, fluorocarbons, hydrochlorocarbons, chlorofluorocarbons, hydrofluorocarbons and hydrocarbons. In some preferred embodiments, water is used as the sole blowing agent.

The isocyanate component B and/or the isocyanate reactive component A may optionally contain catalysts. Suitable catalysts are known to the person skilled in the art. Examples are tertiary amines and/or organic metal compounds, especially tin compounds, that are generally known for this purpose. Further preferred examples being potassium acetate, potassium formiate and/or Li salts. Particularly suitable catalysts e) are tertiary amines of the type known per se, e.g. triethylamine, tributylamine, N-methylmorpholine, N-ethylmorpholine, N-cocomorpholine, N,N,N',N'-tetramethyl-ethylene-diamine, 1,4-diazabicyclo[2.2.2]octane, N-methyl-N'-dimethylaminoethylpiperazine, N,N-dimethylcyclohexylamine, N,N,N',N'-tetra¬methyl-1,3-butanediamine, N,N-dimethyl-imidazo-phenylethylamine, 1,2-dimethyl¬imidazole, bis(2-dimethylaminoethyl) ether or 2-methylimidazole. It is also possible to use organic metal catalysts such as organic bismuth catalysts, e.g. bismuth(III) neodecanoate, or organic tin catalysts, e.g. tin(II) salts of carboxylic acids, such as tin(II) acetate, tin(II) octanoate, tin(II) ethylhexanoate and tin(II) laurate, and the dialkyltin salts of carboxylic acids, e.g. dibutyltin diacetate, dibutyltin dilaurate, dibutyltin maleate or dioctyltin diacetate, by themselves or in combination with the tertiary amines. In some embodiments, it may be preferred to use catalytic compounds which may not be incorporated into the polyurethane. The catalysts can be used by themselves or in combination. It is preferable to use from 0 to 3,0 wt.%, more preferable from 0,05 to 3,0 wt.% and particularly preferable from 0,1 to 2,0 wt.%, of catalyst or catalyst combination.

The isocyanate component B and/or the isocyanate reactive component A may further contain fillers, other additives and/or adjuvants. Fillers can be organic or inorganic fillers known in the art. For example, inorganic fillers include silicate minerals, metal oxides such as alumina, titania and iron oxides. Examples of adjuvants and/or additives used include surface-active substances, foam stabilizers, cell regulators, external and internal mold release agents, fillers, pigments, dyes, flame retardants, antistatic agents, hydrolytic stabilizers and substances that inhibit fungi and bacteria.

In a preferred embodiment of the present invention, the isocyanate component B and/or the isocyanate reactive component A may comprise a flame retardant. The flame retardant may include various conventional flame retardants in the field, including but not limited to, additive flame retardants and reactive flame retardants. Halogenated phosphate flame retardants are flame retardants commonly used in polyurethane foams. Most of the halogenated phosphates are liquid at room temperature and well compatible with polyols, including tris(2-chloropropyl)phosphate (TCPP), tris(2-chloroethyl)phosphate (TCEP), tris(dichloropropyl)phosphate (TDCPP), tris(dibromopropyl)phosphate, tetrakis(2-chloroethyl) ethylene diphosphate, bis[di(2-chloroethyl)]diethylene glycol phosphate, 2,2-dimethyl-3-chloropropylbis(1,3 -dichloro-2-propyl) phosphate, 2,2-dimethyl-3 -bromo-propyl-β-bromoethyl phosphoric acid, diphosphates or polyphosphates. The flame retardants may also be phosphonate flame retardants, including dimethyl methylphosphonate (DMMP), diethyl ethylphosphonate, dimethyl propylphosphonate, triisopropyl phenyl phosphate, triethyl phosphate, etc. Inorganic solid flame retardants may also be used in the present invention, such as melamine and its derivatives, red phosphorus and its complexes, aluminum hydroxide powder and the like. The content of flame retardants in the system generally needs to reach a certain amount to achieve the flame retardant effect. Liquid flame retardants are preferably used. The flame retardant is preferably used in an amount of 5-50 % by weight, preferably 15-40 % by weight, relative to the polyurethane foam composition.

In another preferred embodiment, the isocyanate reactive component A and isocyanate component B comprise no flame retardant.

For the preparation of the polyurethane foam composition, the isocyanate reactive component A is mixed with a isocyanate component B.

The isocyanate component B comprises one or more isocyanate compounds from the group comprising aromatic polyisocyanates. Particular preferred are 2,2'-, 2,4'- or 4,4'-diphenylmethane diisocyanate (monomeric MDI) with an isocyanate functionality of 2 and/or higher homologues thereof (oligomeric MDI) with an NCO content of 28 to 50 wt.% and isocyanate functionalities > 2, the mixture of monomeric and oligomeric MDI generally and herein called polymeric MDI (pMDI).

Herein, the term "MDI" is used for monomeric MDI, oligomeric MDI and polymeric MDI, or a mixture of any one thereof, as the case may be.

In addition and preferably, the isocyanate component may comprise modified MDI and/or NCO prepolymers with an NCO content of 10 to 48 wt.%.

"Modified MDI" as used herein is a MDI which is partially modified with carbodiimide groups (CD), uretonimine (UI) groups and/or allophanate or biuret groups, most preferably with carbodiimide groups (CD) and uretonimine (UI) groups. Such modified isocyanates are known per se and are described e.g. in WO 2007/006622. The use of modified MDI increases the stability, e.g. the low-temperature stability and/or the long-term stability of the polyurethane.

NCO prepolymers with an NCO content of 10 to 48 wt.% are likewise suitable as component B). They are prepared from MDI and polyetherpolyols as described above for use in the isocyanate reactive compound, preferably with a hydroxyl number of 6 to 112, also preferred are polyoxyalkylene diols with a hydroxyl number of 113 to 1100, in particular dipropyleneglycol and / or tripropyleneglycol, or alkylenediols with a hydroxyl number of 645 to 1850, or mixtures thereof.

NCO prepolymers based on carbodiimide-modified MDI may also be used and are known and described in e.g. WO 2002/048231 and WO 2006/069624.

In preferred embodiments of the foam compositions, the isocyanate component B comprises a mixture of polymeric MDI, modified MDI and NCO prepolymers of MDI.

It has been found that adhesion performance of the polyurethane foam to other substrates is best when using a combination of polymeric MDI, NCO prepolymers of MDI and modified MDI.

Most preferred is a foam composition obtained by mixing the isocyanate reactive component A as described herein with a mixture of

20 - 70 wt.-%, preferably 30 - 50 wt.-% polymeric MDI, preferably with an NCO - content of 29 - 32 % and preferably with a viscosity (25°C) of 80 - 750 mPa.s, preferably 100 - 300 mPa.s,

1-20 wt.%, preferably 1 - 10 wt.% carbodiimide-modified MDI, preferably comprising monomeric MDI, with an NCO content of 22 - 32 %, e.g. CD-modified 4,4' MDI,

29 - 79 wt-%, preferably 40 - 75 wt.%, NCO-prepolymer based on MDI, preferably comprising monomeric MDI, and a diol or a polyol selected from one or more of polyether polyols with a hydroxyl number of 6 - 112 and polyoxyalkylene diols with a hydroxyl number of 113 to 1100.

The isocyanate index (also known as the index) is to be understood as meaning the quotient of the actually employed amount of substance [mol] of isocyanate groups and the actually employed amount of substance [mol] of isocyanate reactive groups, multiplied by 100:

$$\text{index} = (\text{moles of isocyanate groups/moles of isocyanate reactive groups}) * 100$$

It is possible that in the reaction mixture the number of NCO groups in the isocyanate and the number of isocyanate reactive groups result in an index of 90 to 600, preferably between 90 and 130, more preferably between 95 and 120 and most preferably between 98 and 115.

The NCO value (also known as NCO content, isocyanate content) is determined according to EN ISO 11909 (May 2007). Unless otherwise stated values at 25°C are concerned.

A further aspect of the invention is the use of the polyurethane foam composition as encapsulation material in battery module and a battery module wherein the electric cells are encapsulated in an encapsulation material which is made with the reactive polyurethane foam composition made from mixing the herein described isocyanate reactive component A and isocyanate component B.

The battery module may be manufactured by a process comprising the steps a) providing a battery and b) inserting the reactive foam composition into the spaces between the adjacent electric cells and allowing the reaction mixture to cure.

**Examples**

**Raw Materials**

A1-1: polyetherpolyol, prepared by the propoxylation of glycerin and subsequent ethoxylation; OH number: 35, weight-ratio PO : EO = 87 : 13 (82 % primary hydroxy functions; isocyanate reactive functionality is 3)

A2-1: polyetherpolyol with a isocyanate reactive functionality of 4, and an OH number of 620 mg KOH/g, prepared by the propoxylation of ethylenediamine

A4-1: diethylene glycol

A5-1: glycerin, isocyanate reactive functionality of 3

A3-1 = polypropylene polyethylene glycol monobutyl ether (endcapped with ethyleneoxide), OH number 25 mg KOH/g; isocyanate reactive functionality of 1

Stabilizer 1: TEGOSTAB® B 8485, silicone stabilizer, Evonik Industries

Catalyst 1: Niax A1 (Amine catalyst, Momentive Performance Materials)

Catalyst 2: Polycat 15 (bis-(dimethylaminopropyl)-amine, Evonik Industries)

Iso 1 : Desmodur 44V20L, polymeric MDI with an NCO - content of 31,5 %, viscosity (25°C): 200 mPa.s

Iso 2: Desmodur CD-S from Covestro Deutschland AG (partially carbodiimide-modified diphenylmethane-4,4'-diisocyanate with an NCO content of 29.5%), viscosity (25°C): 35 mPa.s

Iso 3 : NCO-prepolymer based on polymeric MDI, monomeric MDI and tripropyleneglycol, Covestro Deutschland AG, NCO - content of of 23 %, viscosity (25°C): 600 mPa.s

**Production of polyurethane foams / laboratory foam**

The foams were produced using the hand foaming method. All components with the exception of the polyisocyanate component are pre-stirred for 30 s (stirring speed: 1400 rpm). The isocyanate component is then added and stirring is continued for 15 s at room temperature.

The reactivity of the polyol component was determined by the start and rise time in parallel experiments, with the polyol formulation as described being combined with the polyisocyanate component in a beaker with stirring at room temperature. The start time is the time that elapses from the time the polyisocyanate is added to the start of the foaming process; The rising time is the time that elapses from the time the polyisocyanate is added to the end of the foaming process. The density is calculated after cutting off the foam tip in a 660 ml cup. For molded parts in the hand hand foaming method, reaction mixture was applied to the open mold at a mold temperature of approximately 42 ° C, and this was closed, the amount of reaction mixture being chosen so that an average density of the foam of 400 kg / m$^3$ resulted. After about 15 minutes, the molded parts (20×20×1cm) intended for the mechanical test were removed from the mold and stored at room temperature for at least 48 hours before cutting and testing.

**Production of polyurethane foams / machine foam**

Polyurethane foams were produced from the components listed in Tables 1-3, with all quantities of the components given in parts by weight.

To produce the foams, all components of the polyurethane reaction mixture, with the exception of the isocyanate composition, were first mixed in a 200 L drum with a stirrer for approx. 1 hour, so that 150 kg of a homogeneous polyol formulation (component reactive towards isocyanates) was present. The high-pressure system was then filled with both components (component reactive towards isocyanates and isocyanate composition) and the temperature was set to 30 °C. The two components were then mixed at 150 bar component pressure using a high-pressure mixing head. The resulting reaction mixture was applied to the open mold at a mold temperature of approximately 42 °C, and this was closed, the amount of reaction mixture being chosen so that an average density of the foam of 400 kg / m$^3$ resulted. After about 15 minutes, the molded parts (20×20×1cm) intended for the mechanical test were removed from the mold and stored at room temperature for at least 48 hours before cutting and testing. To check the adhesion performance, the substrates (test specimens) were backfoamed within a mold at same process and material conditions, which are applied to the preparation of the foam parts for mechanical tests.

Measurements were carried out on the foams obtained in accordance with the following standards, the results of which are also shown in Tables 1 - 3.

| | |
|---|---|
| Density: | DIN EN ISO 845 |
| Tensile strength: | Tensile test DIN EN ISO 1798: 04/2008 |
| Elongation at break: | Tensile test DIN EN ISO 1798: 04/2008 |
| E-modulus: | Tensile test DIN EN ISO 1798: 04/2008 |
| Tensile lap-shear strength of bonded assemblies: | DIN EN 1465:2009-07 |

Evaluation of adhesion performance

Adhesion refers to the surface adhesion that occurs on the surface of the boundary layer on the adhesive and part-side, as a result of general attractive forces between different types of substances.

Cohesion is generally understood to mean the effect of forces between similar atoms or molecules of the same substance. In the case of cohesive failure, a residue of foam remains on the substrate surfaces, although in the case of adhesive failure, no foam residue remains on the substrate surface.

Polyurethane foam composition used as encapsulation material for battery modules needs a high amount of remaining foam on the substrate surfaces to enable and insure the battery module function.

Especially after heat aging test (192h at 90°C and 80% rel. humidity), the amount of remaining foam on the substrate surface should be on a high level (cohesion failure, evaluation result "+" or "++").

Adhesion failures means that only a low amount of residual foam remains on the substrate surface, which leads to insufficent evaluation results (evaluation result "-" or "- -").

Foam adhesion performance was tested on several kind of substrate materials and related surfaces, e.g. steal, Hilumin® and/or organic surfaces (e.g. thermoplastics).

Table 1: Compositions and Foam properties (various concentrations monool)

| Example N$_0$.<br>Isocyanate reactive component A | | 1* | 2 | 3 | 4 | 5 | 6 | 7* |
|---|---|---|---|---|---|---|---|---|
| A1-1 | pbw | 74,37 | 71,87 | 69,37 | 66,87 | 64,37 | 62,47 | 57,47 |
| A2-1 | pbw | | | | | | 5,00 | 5,00 |
| A4-1 | pbw | 16,00 | 16,00 | 16,00 | 16,00 | 16,00 | 16,00 | 16,00 |
| A5-1 | pbw | 8,00 | 8,00 | 8,00 | 8,00 | 8,00 | 5,00 | 5,00 |
| A3-1 | pbw | | 2,50 | 5,00 | 7,50 | 10,00 | 10,00 | 15,00 |
| Stabiliser 1 | pbw | 2,00 | 2,00 | 2,00 | 2,00 | 2,00 | 1,00 | 1,00 |
| Catalyst 1 | pbw | 0,10 | 0,10 | 0,10 | 0,10 | 0,10 | 0,10 | 0,10 |
| Catalyst 2 | pbw | 0,15 | 0,15 | 0,15 | 0,15 | 0,15 | 0,05 | 0,05 |
| water | pbw | 0,38 | 0,38 | 0,38 | 0,38 | 0,38 | 0,38 | 0,38 |
| **Isocyanate B (100 parts A : B)** | | | | | | | | |
| Iso 1 | pbw | 47,50 | 47,50 | 47,50 | 47,50 | 47,50 | 47,05 | 47,05 |
| Iso 2 | pbw | 5,00 | 5,00 | 5,00 | 5,00 | 5,00 | | |
| Iso 3 | pbw | 47,50 | 47,50 | 47,50 | 47,50 | 47,50 | 47,05 | 47,05 |
| Index | | 100 | 100 | 100 | 100 | 100 | 100 | 100 |

(continued)

| Foam Properties | | | | | | | | |
|---|---|---|---|---|---|---|---|---|
| Density | [kg/m$^3$] | 378 | 387 | 383 | 387 | 375 | 390 | 375 |
| E-Modulus | [MPa] | 59,3 | 60,8 | 43,4 | 48,0 | 34,5 | 38,3 | 27,7 |
| Elongation at break | [%] | 28 | 32 | 37 | 35 | 34 | 38 | 35 |
| Tensile strength | [kPa] | 3,1 | 3,5 | 3,2 | 3,5 | 3,0 | 3,2 | 2,7 |
| Adhesion Performance | | ++ | ++ | ++ | ++ | ++ | + | + |

Table 2 Compositions and Foam properties (different Isocyanates)

| Example No. | | 8 | 9 | 6 | 10 | 11 | 12 |
|---|---|---|---|---|---|---|---|
| **Isocyanate reactive component A** | | | | | | | |
| A1-1 | pbw | 64,37 | 64,37 | 62,47 | 62,47 | 62,47 | 62,47 |
| A2-1 | pbw | | | 5,00 | 5,00 | 5,00 | 5,00 |
| A4-1 | | 16,00 | 16,00 | 16,00 | 16,00 | 16,00 | 16,00 |
| A5-1 | pbw | 8,00 | 8,00 | 5,00 | 5,00 | 5,00 | 5,00 |
| A3-1 | pbw | 10,00 | 10,00 | 10,00 | 10,00 | 10,00 | 10,00 |
| Stabiliser 1 | pbw | 1,00 | 1,00 | 1,00 | 1,00 | 1,00 | 1,00 |
| Catalyst 1 | pbw | 0,10 | 0,10 | 0,10 | 0,05 | 0,05 | 0,05 |
| Catalyst 2 | pbw | 0,15 | 0,15 | 0,05 | 0,05 | 0,05 | 0,05 |
| water | pbw | 0,38 | 0,38 | 0,38 | 0,38 | 0,38 | 0,38 |
| **Isocyanate B (100 parts A :B)** | | | | | | | |
| Iso 1 | pbw | 47,50 | 50,39 | 47,05 | 81,83 | 111,53 | 41,96 |
| Iso 2 | | 5,00 | | | | | 41,96 |
| Iso 3 | | 47,50 | 50,39 | 47,05 | | | |
| Index | | 100 | 100 | 100 | 100 | 100 | 100 |
| **Foam Properties** | | | | | | | |
| Density | [kg/m$^3$] | 373 | 360 | 375 | 383 | 400 | 384 |
| E-Modulus | [MPa] | 38,3 | 36,2 | 27,7 | 34,3 | 24,7 | 25,1 |
| Elongation at break | [%] | 36 | 37 | 35 | 23 | 79 | 30 |
| Tensile strength | [kPa] | 3,4 | 3,1 | 2,7 | 2,8 | 2,6 | 2,6 |
| Adhesion Performance | | ++ | + | + | -- | + | + |

Table 3: Compositions and Foam properties (various ratios chain extender - crosslinker)

| Example No. | | 13 | 14 | 15 | 16 | 17 |
|---|---|---|---|---|---|---|
| **Isocyanate reactive component A** | | | | | | |
| A1-1 | pbw | 64,37 | 56,37 | 64,37 | 64,37 | 60,37 |
| A2-1 | pbw | | | | | |
| A4-1 | pbw | 20,00 | 32,00 | 16,00 | 18,00 | 24,00 |
| A5-1 | pbw | 4,00 | | 8,00 | 6,00 | 4,00 |
| A3-1 | pbw | 10,00 | 10,00 | 10,00 | 10,00 | 10,00 |
| Stabiliser 1 | pbw | 2,00 | 2,00 | 2,00 | 2,00 | 2,00 |
| Catalyst 1 | pbw | 0,10 | 0,10 | 0,10 | 0,10 | 0,08 |
| Catalyst 2 | pbw | 0,15 | 0,15 | 0,15 | 0,15 | 0,10 |
| water | pbw | 0,38 | 0,38 | 0,38 | 0,38 | 0,38 |
| **Isocyanate B (100 parts A : B)** | | | | | | |
| Iso 1 | pbw | 43,77 | 50,42 | 47,79 | 45,78 | 49,07 |
| Iso 2 | pbw | 4,61 | 5,31 | 5,03 | 4,82 | 5,17 |
| Iso 3 | pbw | 43,77 | 50,42 | 47,79 | 45,78 | 49,07 |
| Index | | 100 | 100 | 100 | 100 | 100 |

(continued)

| Foam Properties | | | | | | |
|---|---|---|---|---|---|---|
| Density | [kg/m$^3$] | 415 | 413 | 405 | 399 | 3921 |
| E-Modulus | [MPa] | 23,9 | 42,6 | 45 | 32,5 | 31,9 |
| Elongation at break | [%] | 51 | 34 | 354 | 39 | 39 |
| Tensile strength | [kPa] | 3,3 | 3,9 | 3,8 | 3,3 | 3,1 |
| Adhesion Performance | | ++ | ++ | ++ | ++ | ++ |

**Claims**

1. An isocyanate reactive component comprising

   A1) 50 - 80 wt.-%, preferably 60 - 70 wt.-%, based on the total weight of A, polyols selected from the group consisting of polyether polyols with an isocyanate reactive functionality of 2,5 -3,5 and an OH number of > 20 mg KOH / g and < 280 mg KOH/g,
   A2) 0 - 20 wt.-%, preferably 0,1 - 10 wt.%, based on the total weight of A, polyols selected from the group consisting of polyether polyols with an isocyanate reactive functionality of 2,5 - 4,5 and an OH number of $\geq$ 280 mg KOH / g and < 700 mg KOH/g,
   A3) > 0,0 - < 15,0 wt.-%, preferably 1 - 12 wt.-%, more preferably 3-10 wt.% based on the total weight of A, chain terminators selected from the group consisting of compounds with an isocyanate reactive functionality f of 0,8 - 1,2,
   A4) > 10 - < 35 wt. -%, preferably 12 - 25 wt. -%, based on the total weight of A, chain extenders selected from the group consisting of compounds with an isocyanate reactive functionality of 1,8 - 2,2 and a molecular weight of < 500 g/mol, preferably < 300 g/mol, more preferably < 200 g/mol,
   A5) 0 - < 12 wt.-%, preferably 1-10 wt.-%, based on the total weight of A, crosslinkers selected from the group consisting of compounds comprising compounds with an isocyanate reactive functionality > 2,2 and a molecular weight of < 500 g/mol, preferably < 400 g/mol, most preferably < 300 g/mol
   A6) 0,2 - 2 wt.%, based on the total weight of A, water,
   A7) optionally a catalyst, and
   A8) optionally adjuvants and additives.

2. An isocyanate reactive component A according to claim 1 wherein the chain terminators A3) are selected from monools.

3. An isocyanate reactive component A according to claim 1 wherein the chain terminators A3) are selected from monools selected from the group consisting of monoethers of polyalkylene glycols made with a mixture of alkyleneoxides, particularly with a mixture of propylenoxide and ethylenoxide.

4. An isocyanate reactive component A according to claim 1 wherein the chain terminators A3) are selected from monools selected from the group consisting of monoethers of polyalkylene glycols made with a mixture of propyleneoxide and ethyleneoxide, wherein the polyalkylenoxide chains are endcapped with polyethylene oxide blocks.

5. An isocyanate reactive component A according to any one of claims 1 to 4 wherein the chain terminators A3) are selected from compounds with an OH number of 10 and 200 mg KOH/g, more preferably between 10 and 112, most preferably between 12 and 30 mg KOH/g.

6. An isocyanate reactive component A according to any one of the preceding claims, wherein component A1) is a trifunctional polyalkyleneoxide, wherein the alkylenoxide is a mixture of ethylenoxide (EO) and propylenoxide (PO) with an EO/PO molar ratio of 10:90 - 15:85.

7. An isocyanate reactive component A according to any one of the preceding claims, wherein the weight ratio of components A4:A5 in the isocyanate reactive component is 2,5:1 to 8 :1.

8. A process to manufacture a reactive polyurethane foam composition comprising the steps:

a. providing an isocyanate reactive component A according to any one of claims 1 -7, and
b. providing an isocyanate component B) comprising polymeric MDI, and
c. mixing the isocyanate reactive component A) and the isocyanate component B.

9. A reactive polyurethane foam composition produced by the process according to claim 8.

10. A reactive polyurethane foam composition according to claim 9 wherein the isocyanate component B further comprises carbodiimide-modified MDI and /or NCO prepolymers based on MDI.

11. A reactive polyurethane foam composition according to claim 9 wherein the isocyanate component B comprises

20 - 70 wt.-%, preferably 30 - 50 wt.% polymeric MDI, preferably with an NCO - content of 29 - 32 % and preferably with a viscosity (25°C) of 80 - 750 mPa.s, most preferred 100 - 300 mPa.s,
1 - 20 wt.-%, preferably 1 - 10 wt.% carbodiimide-modified MDI with an NCO content of 22 - 32 %, and
29 - 79 wt-%, preferably 40 - 75 wt.-%, NCO-prepolymer based on MDI, preferably monomeric MDI, and a diol or a polyol selected from one or more of polyether polyols with a hydroxyl number of 6 - 112 and polyoxyalkylene diols with a hydroxyl number of 113 to 1100.

12. A reactive polyurethane foam composition according to claim 9, 10 or 11, wherein the isocyanate index is from 90 to 130, preferably from 95 - 120, most preferably from 98 - 115.

13. Use of the polyurethane foam composition according to claim 9, 10, 11 or 12 as encapsulation material in a battery module.

14. Method of manufacturing a battery module comprising the steps a) providing a battery case having the electric cells arranged within defining spaces between the adjacent electric cells b) inserting the reactive foam composition according to any one of claims 9 to 12 into the spaces between the adjacent electric cells and allowing the reaction mixture to cure.

15. A battery module wherein the electric cells are encapsulated in an encapsulation material which is made with a reactive polyurethane foam composition according to any one of claims 9 to 12.

Europäisches
Patentamt

European
Patent Office

Office européen
des brevets

# EUROPEAN SEARCH REPORT

**Application Number**

EP 24 17 0621

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/061679 A2 (BASF SE [DE]; BASF CHINA CO LTD [CN]) 28 March 2024 (2024-03-28) * claim 1; example 2 * | 1-15 | INV. C08G18/28 C08G18/48 C08G18/66 |
| X,D | & CN 117 096 413 A (BASF SE) 21 November 2023 (2023-11-21) ----- | 1-15 | C08G18/76 C08G18/79 |
| A | US 2002/035165 A1 (BRUCHMANN BERND [DE] ET AL) 21 March 2002 (2002-03-21) * table 4 * ----- | 1-15 | |
| A | US 5 767 323 A (TELEVANTOS YIANNAKIS [US] ET AL) 16 June 1998 (1998-06-16) * column 1, line 34 - column 2, line 3 * * column 3, lines 33-40 * ----- | 1-15 | |
| X | US 2014/073712 A1 (OTERO MARTINEZ IRAN [DE] ET AL) 13 March 2014 (2014-03-13) * paragraphs [0016], [0017], [0076] - [0079]; table 3 * ----- | 1,2,6, 8-10,12 | |
| X | EP 2 799 459 A1 (BASF SE [DE]) 5 November 2014 (2014-11-05) * paragraphs [0016], [0017], [0054] - [0057]; table 3 * ----- | 1,2,6, 8-10,12 | **TECHNICAL FIELDS SEARCHED (IPC)** C08G |

The present search report has been drawn up for all claims

| Place of search | Date of completion of the search | Examiner |
|---|---|---|
| Munich | 30 September 2024 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 0621

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | | | Publication date | Patent family member(s) | | | Publication date |
|---|---|---|---|---|---|---|---|
| WO 2024061679 | A2 | | 28-03-2024 | CN | 117096413 | A | 21-11-2023 |
| | | | | WO | 2024061679 | A2 | 28-03-2024 |
| US 2002035165 | A1 | | 21-03-2002 | AT | E301146 | T1 | 15-08-2005 |
| | | | | CA | 2353209 | A1 | 19-01-2002 |
| | | | | DE | 10035400 | A1 | 31-01-2002 |
| | | | | DK | 1174452 | T3 | 26-09-2005 |
| | | | | EP | 1174452 | A1 | 23-01-2002 |
| | | | | JP | 2002069148 | A | 08-03-2002 |
| | | | | KR | 20020008059 | A | 29-01-2002 |
| | | | | US | 2002035165 | A1 | 21-03-2002 |
| US 5767323 | A | | 16-06-1998 | AR | 005181 | A1 | 14-04-1999 |
| | | | | AU | 715766 | B2 | 10-02-2000 |
| | | | | BR | 9612255 | A | 13-07-1999 |
| | | | | CN | 1208426 | A | 17-02-1999 |
| | | | | CZ | 293882 | B6 | 18-08-2004 |
| | | | | DE | 69634930 | T2 | 20-04-2006 |
| | | | | EP | 0868468 | A1 | 07-10-1998 |
| | | | | ES | 2243955 | T3 | 01-12-2005 |
| | | | | JP | 4102902 | B2 | 18-06-2008 |
| | | | | JP | 2000513389 | A | 10-10-2000 |
| | | | | KR | 19990071642 | A | 27-09-1999 |
| | | | | PL | 327313 | A1 | 07-12-1998 |
| | | | | RU | 2178426 | C2 | 20-01-2002 |
| | | | | TW | 420690 | B | 01-02-2001 |
| | | | | US | 5767323 | A | 16-06-1998 |
| | | | | WO | 9723544 | A1 | 03-07-1997 |
| US 2014073712 | A1 | | 13-03-2014 | NONE | | | |
| EP 2799459 | A1 | | 05-11-2014 | NONE | | | |

EPO FORM P0459

For more details about this annex : see Official Journal of the European Patent Office, No. 12/82

## REFERENCES CITED IN THE DESCRIPTION

**Patent documents cited in the description**

- WO 2022188050 A
- US 20190259982 A1
- CN 117096413 A
- WO 2024052451 A1
- WO 2007006622 A
- WO 2002048231 A
- WO 2006069624 A